# EUROPÄISCHE PATENTSCHRIFT

(11) **EP 2 651 646 B1**
(45) Veröffentlichungstag und Bekanntmachung des Hinweises auf die Patenterteilung: **26.02.2014**
(21) Anmeldenummer: 11802276.3
(22) Anmeldetag: 05.12.2011
(51) Int. Cl.: B32B 38/16, B08B 1/04, B29C 63/48, B32B 21/08, B32B 37/22

(54) **VERFAHREN UND VORRICHTUNG ZUM KASCHIEREN EINER SUBSTRATPLATTE MIT EINER KUNSTSTOFFFOLIE**
PROCESS AND APPARATUS FOR LAMINATING A SUBSTRATE PLATE WITH A PLASTIC FILM
PROCÉDÉ ET DISPOSITIF PERMETTANT DE PLASTIFIER UN SUBSTRAT SOUS FORME DE PLAQUE

(30) Priorität: 16.12.2010 DE 102010054813
(43) Veröffentlichungstag der Anmeldung: 23.10.2013
(73) Patentinhaber: Karl W. Niemann GmbH & Co. KG, 32361 Pr. Oldendorf-Hedem (DE)
(72) Erfinder: SCHUMACHER, Reinhard, 32316 Preussisch Oldendorf (DE)
(74) Vertreter: Schneider, Peter Christian
(86) Internationale Anmeldenummer: PCT/EP2011/006080
(87) Internationale Veröffentlichungsnummer: WO 2012/079713

(56) Entgegenhaltungen:
- EP-A1- 1 666 247
- DE-A1- 3 227 769
- DE-A1- 19 515 087

## Beschreibung

### Gebiet der Erfindung

Die Erfindung betrifft ein Verfahren zum Kaschieren einer Substratplatte mit einer Kunststofffolie, bei dem folgende Schritte durchgeführt werden:
a) Auftragen eines Klebers kontaktlos mittels Düsenauftrag auf die Rückseite der Kunststofffolie;
b) Aufkaschieren der Kunststofffolie auf die Substratplatte mittels einer Kaschierwalze und einer der Kaschierwalze an der Rückseite der Substratplatte gegenüberliegenden Gegendruckwalze.

Die Erfindung betrifft weiterhin eine Vorrichtung zum Kaschieren einer Substratplatte mit einer Kunststofffolie, die eine Kleberauftragevorrichtung zum kontaktlosen Düsenauftrag eines Klebers, eine Kaschierstation mit einer Kaschierwalze und einer der Kaschierwalze gegenüberliegenden Gegendruckwalze, sowie eine Fördereinrichtung für die Substratplatten aufweist.

### Stand der Technik

Aus der DE 10 2006 007 869 A1 ist ein Verfahren und eine Vorrichtung zum Kaschieren einer Kunststofffolie auf eine Substratplatte, beispielsweise eine Holzwerkstoffplatte, insbesondere zur Erzeugung einer Hochglanzoberfläche bekannt. Die Kunststofffolie, beispielsweise eine PET-Folie, wird dabei auf ihrer der Substratplatte zugewandten Rückseite einer Corona-Behandlung unterzogen. Anschließend wird ein Kleber, beispielsweise durch Düsenauftrag kontaktlos auf die vorbehandelte Folie aufgetragen. In einem Folgeschritt erfolgt dann das Aufkaschieren der Kunststofffolie auf die Substratplatte mittels einer Kaschierwalze und einer der Kaschierwalze an der Rückseite der Substratplatte gegenüberliegenden Gegendruckwalze.

Bei dem bekannten Verfahren hat sich gezeigt, dass sich insbesondere bei der Verwendung von Substratplatten aus Holzwerkstoffen mit einer Kunststoffoberfläche bei der Kaschierung mit hochglänzenden PET-Folien eine relativ hohe Ausschussrate mit Oberflächenfehlern ergibt.

Weiterhin ist aus der DE 10 2005 055 295 A1 ein Verfahren und eine Vorrichtung zum Beschichten bzw. Kaschieren eines metallischen Trägermaterials mit einem bahnförmigen Beschichtungsmaterial, beispielsweise orientierter Polypropylen-Folie, bekannt. Das Trägermaterial bzw. die Substratplatte wird mittels einer Zuführeinrichtung einer Beschichtungsstation zugeführt, in der es durch einen zwischen einer Gegendruckwalze und einer Beschichtungs- bzw. Kaschierwalze gebildeten Spalt geführt und unter der Einwirkung der durch die Walzen erzeugten Druckkräfte mittels eines Klebstoffs mit dem bahnförmigen Beschichtungsmaterial geklebt wird. Der Kleber wird dabei kontaktlos mittels einer Schlitzdüse auf die Rückseite der Folie aufgetragen. Unterhalb der Düsenlippe der Schlitzdüse ist dabei ein Walzenpaar angeordnet, durch dessen Spalt das Beschichtungsmaterial gezogen wird, wobei gleichzeitig die Applikation des Klebstoffes erfolgt. Dieses Walzenpaar wirkt auch als Abzugskalander und besteht aus einer ersten, nicht angetriebenen druckeinstellbaren Walze und einer zweiten Releasewalze. Die Releasewalze wird dabei mit einer Voreilung von etwa 3 bis 10 % zur Beschichtungswalze betrieben.

Nachteilig dabei ist, dass die klebstoffbeschichtete Seite des bahnförmigen Beschichtungsmaterials die Releasewalze teilweise umschlingt. Dabei soll eine dehnende oder verformende Zugspannung vermieden werden.

Zum Schneiden von Folienüberständen ist ein rotierendes Trennmesser nach dem Kaschiervorgang vorgesehen. Vor dem Kaschiervorgang ist in einer Reinigungsstation eine Reinigung der Metallplatten vorgesehen. Die Reinigung kann dabei mechanisch, thermisch oder durch flüssige Reinigungsmittel erfolgen.

Nachteilig dabei ist, dass mit keiner dieser Reinigungsmethoden eine ausreichende Reinigung, insbesondere von Holzwerkstoffsubstratplatten oder von , Holzwerkstoffsubstratplatten mit einer Kunststoffoberfläche erzielt wird, die mit hochglänzenden Folien beschichtet werden sollen.

### Aufgabenstellung

Aufgabe der vorliegenden Erfindung ist es daher, die bekannten Verfahren und die bekannten Vorrichtungen so zu verbessern, dass insbesondere Holzwerkstoffsubstratplatten in ausreichender Qualität mit hochglänzenden PET-Folien beschichtet werden können. Auch sollen Fehler der Oberflächen infolge von Verunreinigungen oder anderen Mängeln beim Kaschiervorgang vermieden werden.

### Darstellung der Erfindung

Die Aufgabe bezüglich des Verfahrens wird in Verbindung mit dem Oberbegriff des Anspruches 1 dadurch gelöst, dass die Substratplatte in Förderrichtung vor der Kaschierwalze in einer Reinigungsstation in einem ersten Schritt mit Hilfe von quer zueinander bürstenden Bürsten unter Zuführung von über einen Ionenstab entladener Blasluft und Absaugung von Feinstaub enthaltender Abluft trocken gereinigt wird, und dass in einem zweiten Schritt mit organischen Lösungsmitteln und einem silikonfreien Tuch feucht gereinigt wird.

Die quer zueinander über die ganze Breite der Substratplatte bürstenden Bürsten verbessern bereits das mechanische Reinigungsergebnis. Gerade bei der Verwendung von Holzwerkstoffsubstraten hat sich gezeigt, dass Bürsten in Verbindung mit einer Absaugung, die bläst und saugt, zu guten Reinigungsergebnissen führen. Von besonderer Bedeutung ist dabei, dass die zugeführte Blasluft über einen Ionenstab entladen wird, wodurch sich das Absaugergebnis erheblich verbessert.

Die nachfolgende Feuchtreinigung mit organischen Lösungsmitteln und einem silikonfreien Tuch ermöglicht eine Reinigung von Verschmutzungen wie beispielsweise Saugerabdrücken und Fingerabdrücken.

Gemäß einer bevorzugten Ausführungsform der Erfindung wird in einem dritten Schritt Oberflächenkontamination der Substratplatte mittels einer Übertragungsrolle auf eine Reinigungsrolle mit klebriger Oberfläche übertragen.

Nach einer weiteren bevorzugten Ausführungsform der Erfindung wird vor dem Kaschieren die zu kaschierende Oberfläche der Substratplatte mittels eines aus mindestens einer Plasmadüse austretenden Plasmas behandelt.

Überraschenderweise hat sich herausgestellt, dass auch sonst nur schwer oder nicht kaschierbare Oberflächen aus Melamin bzw. Melaminharz durch eine der Kaschierung vorhergehende Reinigung und/oder Aktivierung mit einem Atmosphärendruckplasma, das über mindestens eine, bevorzugt über eine Mehrzahl über die Breite der Substratplatte nebeneinander angeordneter Düsen, der Oberfläche der Substratplatte zugeführt wird, mit sehr gutem Ergebnis kaschiert werden können. Soweit Rotationsdüsen verwendet werden, können diese jeweils eine größere Fläche abdecken.

Gemäß einer bevorzugten Ausführungsform der Erfindung bürstet in dem ersten Schritt ein quer zur Förderrichtung des Substrats angeordnete Rundbürste unter Zuführung von Blasluft mit gleichzeitiger Absaugung. Zusätzlich zur Rundbürste ist eine Schwertbürste, die mit einem quer zur Förderrichtung des Substrats umlaufenden Bürstenband quer zur Förderrichtung bürstet, vorgesehen. Dadurch, dass mit der Rundbürste in Längsrichtung der Substratplatte und mit der Schwertbürste quer zur Längsrichtung gebürstet wird, besteht ein erheblich verbesserter Reinigungseffekt.

Nach einer weiteren bevorzugten Ausführungsform der Erfindung wird in dem zweiten Schritt das silikonfreie Tuch mit dem Lösungsmittel besprüht und über eine die Substratoberfläche kontaktierende Walze von einer Vorratsrolle auf eine Verbrauchsrolle gewickelt. Dadurch wird sichergestellt, dass kontinuierlich mit einer sauberen feuchten Tuchfläche gereinigt wird. Zusätzlich oder auch alternativ kann ein mit einem silikonfreien Tuch bespannter Balken quer zur Förderrichtung über die Substratoberfläche gespannt werden, vor den in regelmäßigen Abständen ein organisches Lösungsmittel gesprüht wird. Durch die gleichmäßige Verteilung des organischen Lösungsmittels erreicht man eine homogene und gleichmäßige gereinigte Oberfläche.

Gemäß einer weiteren bevorzugten Ausführungsform der Erfindung werden seitliche Schnittkanten der Substratplatte mit einer Kontaktwalze gereinigt. Lockere Bestandteile der Schnittkanten werden dabei entfernt. Durch die statische Aufladung beim Verkleben würden diese Partikel auf die Folie gesaugt und könnten zu Fehlern führen.

Nach einer weiteren bevorzugten Ausführungsform der Erfindung sind in einem dritten Schritt je zwei Übertragungsrollen mit benachbarter Reinigungsrolle hintereinander angeordnet, die zur kontinuierlichen Reinigung abwechselnd reinigen. Die jeweils gerade nicht benutzte Reinigungsrolle kann dann ausgetauscht werden oder kann zumindest ihr Oberflächenbelag erneuert werden.

Gemäß einer weiteren bevorzugten Ausführungsform der Erfindung erfolgt vor dem Auftragen des Klebers eine Vorbehandlung der Kunststofffolie auf ihrer der Substratplatte zugewandten Rückseite mittels einer Corona-Behandlung in einer Corona-Anlage und wird zwischen der Corona-Behandlung der Folie und dem Kleberauftrag eine Zeitdifferenz von mindestens 10 s eingehalten. Bevorzugt wird dabei eine Zeitdifferenz von etwa 20 s eingehalten. Die Zeitdifferenz von 20 s entspricht dabei einer Folienlänge zwischen dem Ort der Corona-Behandlung und dem Ort des Kleberauftrages. Dabei wird die relative Feuchtigkeit geregelt. Die relative Feuchtigkeit wird kontrolliert, d.h. als Ist-Wert gemessen und an einen vorgegebenen Soll-Wert angepasst.

Nach einer bevorzugten Ausführungsform der Erfindung wird zwischen Klebeauftrag eines Schmelzklebers (Hotmelt), beispielsweise ein feuchtigkeitsvernetzender PUR-Schmelzkleber oder ein PO-Schmelzkleber, und der Kaschierung eine Zeitdifferenz von mindestens 5 s eingehalten. Bevorzugt wird eine Zeitdifferenz von etwa 15 s eingehalten. Der Zeitdifferenz von 15 s entspricht etwa ein Folienabstand zwischen Kleberauftag und Kaschierung von etwa 3.000 mm. In diesem Bereich muss der feuchtigkeitsvernetzende Schmelzkleber die Feuchtigkeit für die Reaktion aufnehmen. Dadurch wird die Gefahr einer Fehlverklebung verringert. Gemäß einer weiteren bevorzugten Ausführungsform der Erfindung ist die Fördergeschwindigkeit der Substratplatten 0,001 bis 0,3 m/min höher ist als die der Kaschierwalze. Durch die höhere Geschwindigkeit der Trägerplatten gegenüber der Kaschierwalze wird auch bei dem Kaschiervorgang die Kunststofffolie gespannt. Dabei werden die Trägerplatten auf Zug gefahren.

Nach einer bevorzugten Ausführungsform der Erfindung werden die seitlichen Folienüberstände der Folie gegenüber der Substratplattenbreite vor dem Kaschieren geschnitten. Dies hat den Vorteil, dass ein Verschmutzen der Kaschierwalze vermieden wird.

Gemäß einer weiteren bevorzugten Ausführungsform der Erfindung wird die Temperatur der heizbaren Kaschierwalze auf einen Wert geregelt, der über der Glasübergangstemperatur der Kunststofffolie liegt. Die Glasübergangs- oder Erweichungstemperatur (T_{G}) ist die Temperatur, bei der Glas die größere Änderung der Verformungsfähigkeit aufweist. Dieser so genannte Glasübergang trennt den unterhalb liegenden spröden energieelastischen Bereich (gleich Glasbereich) vom oberhalb liegenden weichen entropieelastischen Bereich (gleich gummielastischer Bereich). Der Übergang in den Fließbereich des amorphen Kunststoffs ist fließend. Allgemein steigt die Glasübergangstemperatur mit der Vernetzungsdichte des Kunststoffs.

Gemäß einer bevorzugten Ausführungsform der Erfindung wird vor der Kaschierwalze der Schmelzkleber durch eine Wärmequelle, beispielsweise Heizplatten oder Strahler, reaktiviert.

Die Aufgabe bezüglich der Vorrichtung wird in Verbindung mit dem Oberbegriff des Anspruchs 14 dadurch gelöst, dass eine Reinigungsstation zur Reinigung der Substratoberfläche der Substratplatten der Kaschierstation vorgelagert ist, dass die Reinigungsstation zur mechanischen Reinigung quer zueinander wirkende Bürsten aufweist, dass eine Absaugvorrichtung vorgesehen ist, über die von einem Ionenstab entladene Blasluft den Bürsten und der Substratoberfläche zugeführt und abgesaugt werden kann, und dass eine Feuchtreinigungsstation vorgesehen ist, in der eine Sprühvorrichtung zum Besprühen mit organischen Lösungsmitteln und eine Vorrichtung zur Reinigung der Substratoberfläche mit einem silikonfreien Tuch oder Tuchbahn angeordnet ist.

Es hat sich gezeigt, dass die Kombination von mechanischer Reinigung mit quer zueinander wirkenden Bürsten in Verbindung mit einer nachfolgenden Feuchtreinigung zu einer erheblich verbesserten Oberflächenqualität führen. Zudem hat sich bei der mechanischen Reinigung eine quer zur Förderrichtung angeordnete Rundbürste in Kombination mit einer quer zur Förderrichtung zur Substratplatte umlaufenden Bürstenband als besonders vorteilhaft erwiesen. Weiter hat sich dabei die Zuführung von über einen Ionenstab entladener Blasluft zu den Bürsten und deren Absaugung als besonders vorteilhaft erwiesen.

Gemäß einer bevorzugten Ausführungsform der Erfindung ist eine Trockenreinigungsstation mit einer Übertragungsrolle zur Übertragung von Oberflächenkontamination der Substratplatte auf eine mit der Übertragungsrolle in Kontakt stehenden Reinigungsrolle mit klebriger Oberfläche vorgesehen.

Es hat sich gezeigt, dass die Kombination von mechanischer Reinigung, Feuchtreinigung und Trockenreinigung zu einer erheblich verbesserten Oberflächenqualität führt.

Nach einer bevorzugten Ausführungsform der Erfindung ist der Kaschierstation eine Plasmaanlage mit mindestens einer Düse zur Vorbehandlung der Oberfläche der Substratplatte mit einem Atmosphärendruckplasma vorgelagert.

Die Plasmaanlage weist eine Mehrzahl über die Breite der Substratplatte nebeneinander angeordneter Düsen auf, über die etwa bei Atmosphärendruck in an sich bekannter Weise Plasma austritt, das der Oberfläche der Substratplatte zugeführt werden kann. Bevorzugt sind die Düsen als Rotationsdüsen ausgebildet, die eine größere Fläche bestreichen können. Auch ist es möglich, den aus der Düse austretenden Plasmastrahl nicht orthogonal sondern schräg auf die Oberfläche der Substratplatte auftreffen zu lassen.

Weitere Einzelheiten der Erfindung ergeben sich aus der nachfolgenden ausführlichen Beschreibung und den beigefügten Zeichnungen, in denen bevorzugte Ausführungsformen der Erfindung beispielhaft veranschaulicht sind.

### Kurzbeschreibung der Zeichnungen

In den Zeichnungen zeigen:
- Figur 1:: eine schematische Darstellung einer Vorrichtung zum Kaschieren einer Substratplatte mit einer Kunststofffolie,

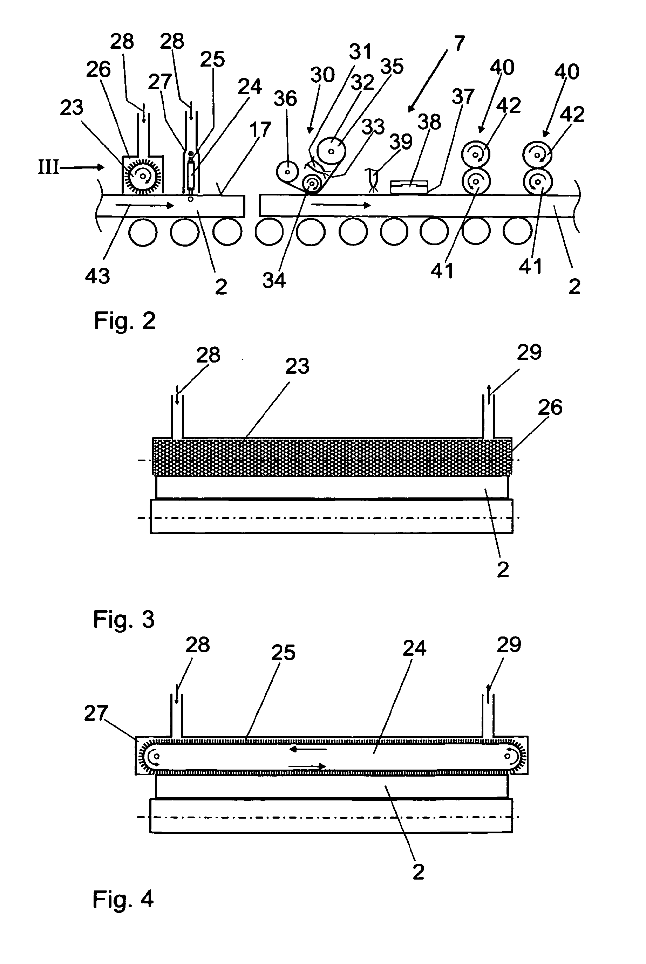

- Figur 2:: eine schematische Darstellung einer der Kaschierwalze entgegen der Förderrichtung vorgelagerten Reinigungsstation,
- Figur 3:: eine Darstellung der Rundbürste von Figur 2 aus Richtung II mit geöffneter Gehäuseabdeckung,
- Figur 4:: eine Ansicht der Schwertbürste von Figur 2 aus Richtung III mit geöffneter Gehäuseabdeckung.
- Figur 5:: eine schematische Darstellung einer der Kaschierwalze entgegen der Förderrichtung vorgelagerten weiteren Reinigungsstation mit einer Plasmaanlage und
- Figur 6:: eine Darstellung der Reinigungsstation von Figur 5 entlang der Linie VI - VI geschnitten mit in zwei Reihen hintereinander versetzt angeordneten Düsen der Plasmaanlage.

### Beschreibung der Ausführungsbeispiele

Eine Vorrichtung 1 zum Kaschieren einer Substratplatte 2 mit einer Kunststofffolie 3 besteht im Wesentlichen aus einer Corona-Anlage 4, einer Kleberauftragsvorrichtung 5, einer Kaschierstation 6 und einer Reinigungsstation 7.

Als Substratplatten 2 werden insbesondere Substratplatten eingesetzt, die in Form von Holzspanplatten, Pressspanplatten oder MDF-Platten (mitteldichte Holzfaserplatte) auf mindestens einer Seite eine Kunststoffoberfläche aufweisen. Solche Substratplatten werden insbesondere in der Möbelindustrie verwendet.

Zur Erzielung einer hochglänzenden Oberfläche werden die Substratplatten 2 mit der Kunststofffolie 3 in der Vorrichtung 1 kaschiert.

Zur Erzeugung einer Hochglanzoberfläche werden dabei insbesondere PET-Hochglanzfolien, also Folien aus Polyethylenterephthalat, verwendet. Dabei werden biaxial gereckte PET-Folien in Stärken von 10 bis 300 µm eingesetzt. Bevorzugt werden Folienstärken von 75 µm verwendet. Folgende Folienarten kommen dabei infrage:
a) biaxial gereckte PET-Folien, glasklar oder mit leichter Trübung, ohne Einsatz von Haftvermittlern;
b) veredelte Oberflächen der Folien, scheuerfest und hochglänzend;
c) bedruckte Folien;
d) bedampfte Folien, wie Spiegel, Chrom oder metallisch;
e) duplierte Folien, d.h. Materialverbunde in verschiedenen Stärken und Arten.

Die Kunststofffolie 3 wird von einer Folienrolle 8 abgewickelt und über die Corona-Anlage 4 und die Klebeauftragsvorrichtung 5 der Kaschierstation 6 zugeführt. Soweit die Kunststofffolie 3 an ihrer Außenseite mit einer Schutzfolie 9 versehen ist, wird die Schutzfolie 9 nach dem Kaschiervorgang auf eine Schutzfolienrolle 10 aufgewickelt.

Bei der Corona-Anlage 4 handelt es sich um eine dem Fachmann bekannte Anlage zur Oberflächenmodifikation von Kunststoffen in einem elektrochemischen Verfahren. Bei der Corona-Behandlung wird die Kunststofffolie 3 einer elektrischen Hochspannungs-Entladung ausgesetzt. Diese tritt zwischen einer geerdeten, polierten Walze 11 aus Stahl oder Aluminium und einer eng anliegenden isolierten Elektrode 12 auf. Die Kunststofffolie 3 liegt dabei auf der polierten Walze 11 auf, so dass nur die der Elektrode 12 zugewandte Rückseite 13 der Kunststofffolie 3 behandelt wird. Über verschiedene Laufrollen 14 wird die Kunststofffolie 3 der Kleberauftragsvorrichtung 5 zugeführt.

In der Kleberauftragsvorrichtung 5 wird über eine Düse 15 kontaktlos Kleber auf die Innenseite 13 der Kunststofffolie 3 aufgebracht. Die Düse 15 ist als eine Schlitzdüse mit einem schlitzförmigen Auslass ausgebildet, der sich über die gesamte Breite der Folienbahn erstreckt. Um einen gleichmäßigen Auftrag über die Breite der Folienbahn bzw. der Kunststofffolie 3 zu erzielen, wird dem schlitzförmigen Auslass der Düse 15 der Kleber über eine Mehrzahl von aneinander gereihten (nicht weiter dargestellten) Einzeldüsen bzw. Ventilen zugeführt. Zwischen Düse 15 und der Kunststofffolie 3 bildet sich dabei ein Kleberfilm. Die Düse trägt berührungslos den Kleber nur auf die gespannte Kunststofffolie 3 auf. Als nachteilig hat sich dabei erwiesen, den Kleberauftrag auf einer einen Gegendruck bildenden Rolle vorzunehmen. Das heißt, der Kleber wird in einem Bereich aufgetragen, in dem die Kunststofffolie 3 die der Kleberauftragsvorrichtung 5 benachbarte Rolle 16 noch nicht kontaktiert.

Als Kleber wird ein feuchtigkeitsvernetzender PUR-Schmelzkleber (PUR-Hotmelt, Polyurethan-Schmelzkleber) oder ein PO-Schmelzkleber (PO-Hotmelt auf Basis von Polyolefine) verwendet. Der Kleber soll dabei optisch transparent sein, so dass er bis zu einer Schicht von 100 µm praktisch farblos ist. Es werden Kleber eingesetzt, die nach ca. 60 s eine Druckhärte von 3,0 N, mit einem Schmissbeständigkeitsprüfer nach Oesterle, Modell 435 von Erichsen gemessen, erreichen. Dies ist durch Kristallisation oder UV-Härtung möglich. Der kristalline Kleber hat dabei den Vorteil, dass kein Einsatz einer zusätzlichen Wärmequelle notwendig ist.

Die Druckhärte muss entsprechend hoch sein, da nach ca. 60 s die Kunststofffolie 3 aufkaschiert wird. Nach ca. 90 s soll die Kleberschicht stapelfest sein. D.h., dass beispielsweise 50 Substratplatten 2 mit einer Stärke von 19 mm mit einem spezifischen Gewicht von 800 kg/m³ abgestapelt werden können, Dabei darf sich durch die Druckbelastung keine Abzeichnung zeigen.

Der Abstand zwischen Punkt A, dem Ort der Corona-Behandlung, und dem Punkt B, dem Ort des Kleberauftrages, beträgt etwa 4.000 mm Folienlänge, was etwa einer Zeitdifferenz (Laufzeit der Folie von A nach B) von 20 s entspricht. Während in der Corona-Anlage 4 der Kunststofffolie 3 die Feuchtigkeit entzogen wird, wird auf der Strecke bis zum Kleberauftrag im Punkt B Feuchtigkeit wieder aufgenommen. Für eine kontrollierte Feuchtigkeitsaufnahme wird die relative Luftfeuchtigkeit gemessen und entsprechend geregelt bzw. angepasst.

In der der Kleberauftragsvorrichtung 5 nachgelagerten Kaschierstation 6 wird die Kunststofffolie 3 mit ihrer Innenseite 13 auf die Oberfläche 17 der Substratplatte 2 mittels einer Kaschierwalze 18 und einer der Kaschierwalze 18 an der Rückseite 19 der Substratplatte 2 gegenüberliegenden Gegendruckwalze 20 aufgebracht bzw. aufkaschiert.

Die Kaschierwalze 18 besteht aus Stahl, ist verchromt und beheizbar. Die Gegendruckwalze 20 ist aus einem Kunststoff mit einer Shorehärte von ca. 70 bis 90 Shore. Der Kaschierdruck beträgt 1 bis 7 bar.

Die Temperatur der Kaschierwalze ist auf einen Wert, vorzugsweise auf 140° C, regelbar, der über den der Glasübergangs- bzw. Erweichungstemperatur (T_{G}) der Kunststofffolie 3 liegt.

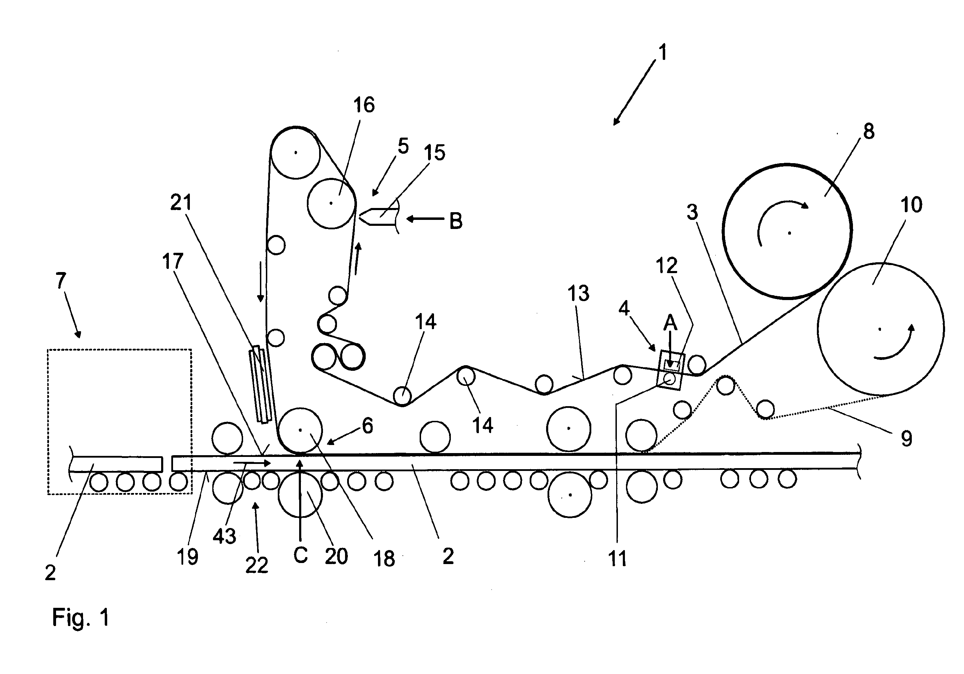

Der Kaschierstation 6 ist eine Wärmequelle 21, im Ausführungsbeispiel der Figur 1 in Form einer Heizplatte, zur Reaktivierung des auf die Kunststofffolie 3 aufgetragenen Klebers vorgelagert.

Der Abstand zwischen Punkt B, dem Ort des Kleberauftrages, und dem Punkt C, dem Ort der Kaschierung, beträgt etwa 3.000 mm Folienlänge, was etwa einer Zeitdifferenz (Laufzeit der Folie von B nach C) von 15 s entspricht. In diesem Bereich nimmt der PUR-Kleber die Feuchtigkeit für die Reaktion auf.

Vor der Kaschierstation 6 ist eine nicht dargestellte Schneidevorrichtung vorgesehen, in der die Folienüberstände der Kunststofffolie 3 gegenüber der Substratplattenbreite der Substratplatten 2 vor dem Kaschieren geschnitten oder abgetrennt werden.

Über eine Fördereinrichtung 22 werden die Substratplatten 2 in der Vorrichtung 1 gefördert bzw. transportiert. Die Substratplatten 2 werden in der Vorrichtung 1 auf Abstand gefördert. Der Abstand beträgt zwischen 3 und 10mm. Dadurch entsteht kein Scheuern der Platten aneinander. Der Übertrag kleiner Späne wird damit vermieden. Die Fördereinrichtung 22 weist zum Einzug der Substratplatten 2 Antriebswalzen auf, deren Mantelfläche aus einem Polymerwerkstoff, beispielsweise Silikon, ausgebildet ist.

Die Substratplatten 2 werden auf Zug gefahren. Das heißt, die Fördergeschwindigkeit der Substratplatten 2 ist um ca. 0,001 bis 0,3 m/min höher als die der Kaschierwalze 18.

Überraschenderweise hat sich gezeigt, dass es für die gewünschte Oberflächenqualität von besonderer Bedeutung ist, die Kunststofffolie 3 in der gesamten Vorrichtung 1 auf Zug zu halten.

Der Kaschierstation 6 ist die Reinigungsstation 7 zur Reinigung der Oberfläche 17 der Substratplatten 2 vorgelagert. Die Reinigungsstation 7 weist zur mechanischen Reinigung zwei quer zueinander wirkende Bürsten 23, 24 auf.

Eine quer zur Förderrichtung 43 der Substratplatten 2 angeordnete Rundbürste 23 bürstet in Längsrichtung, das heißt in Förderrichtung 43 der Substratplatten 2 und eine der Rundbürste 23 nachgelagerte Schwertbürste 24, bürstet mit einem quer zur Förderrichtung der Substratplatten 2 umlaufenden Bürstenband 25 quer zur Förderrichtung 43 der Substratplatten 2.

Beide Bürsten 23, 24 sind von einem zur Substratplatte 2 hin offenen Gehäuse 26, 27 umgeben, wobei den Bürsten 23, 24 über ihre Gehäuse 26, 27 von einer nicht dargestellten Absaugvorrichtung einerseits Blasluft 28 zugeführt wird, die durch einen im Blasluftstrom angeordneten Ionenstab entladen wurde, und andererseits als verunreinigte Abluft 29 abgesaugt wird.

Weiterhin ist eine Feuchtreinigungsstation 30 vorgesehen, die eine Sprühvorrichtung 31 zum Besprühen mit organischen Lösungsmitteln und eine Vorrichtung 32 zur Reinigung der Oberfläche 17 der Substratplatten 2 mit einem silikonfreien Tuch 33 oder Tuchbahn aufweist. Dabei wird das silikonfreie Tuch 33 von der Sprühvorrichtung 31 mit dem Lösungsmittel besprüht und über eine die Oberfläche 17 der Substratplatten 2 kontaktierende Walze 34 von einer Vorratsrolle 35 auf eine Verbrauchsrolle 36 gewickelt.

Zusätzlich (oder auch alternativ) ist ein mit einem silikonfreien Tuch 37 bespannter Balken 38 quer zur Förderrichtung über die Oberfläche 17 der Substratplatten 2 gespannt, vor den in regelmäßigen Abständen ein organisches Lösungsmittel mit einer Sprühvorrichtung 39 gesprüht wird.

Der Feuchtreinigungsstation 30 sind in Förderrichtung 43 zwei Trockenreinigungsstationen 40 nachgelagert, die zur kontinuierlichen Reinigung abwechselnd arbeiten.

Eine Trockenreinigungsstation 40 weist eine die Oberfläche 17 der Substratplatte 2 kontaktierende Übertragungsrolle 41 zur Übertragung von Oberflächenkontaminationen bzw. Oberflächenverunreinigungen von der Oberfläche 17 auf eine mit der Übertragungsrolle 41 in Kontakt stehende Reinigungsrolle 42 mit klebriger Oberfläche auf. Die Übertragungsrolle 41 besteht zumindest an ihrem Umfang aus einem Polymerkunststoff, beispielsweise aus Silikon. Solche Übertragungs- und Reinigungsrollen 41, 42 sind für die Reinigung von photographischen Folien, aus der EP 214 741 A2 bekannt.

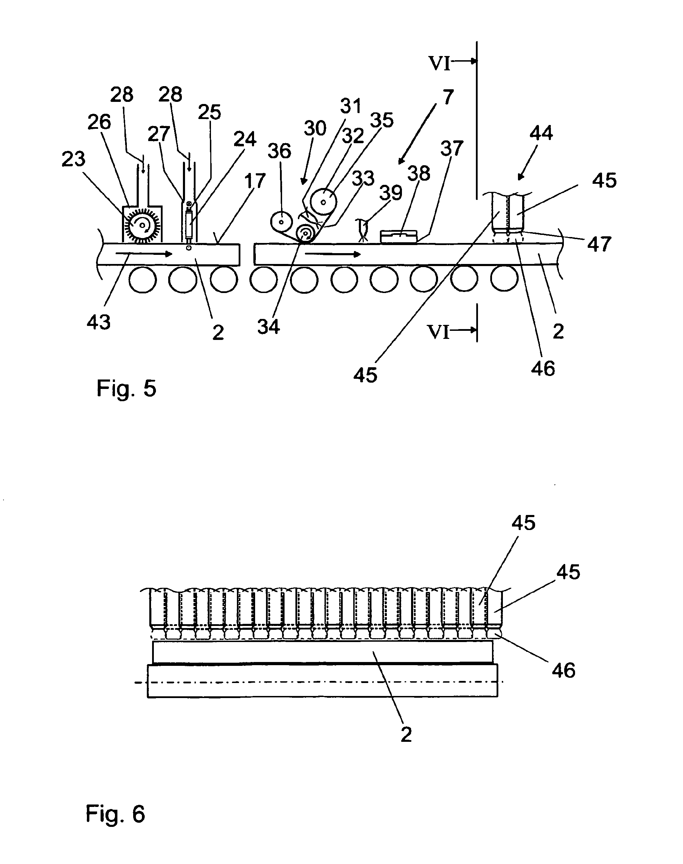

An Stelle der Trockenreinigungsstation 40 oder zusätzlich kann die Reinigungsstation 7 eine Plasmaanlage 44 mit Düsen 45 (siehe Figur 5) aufweisen. In der Düse 45 wird mittels einer Hochspannungsentladung (beispielsweise bei 5-15 kV, 10-100 kHz) ein gepulster Lichtbogen erzeugt. Ein Prozessgas, das an einer Entladungsstrecke vorbeiströmt, wird angeregt und in den Plasmazustand überführt. Das Plasma 46 gelangt durch einen Düsenkopf 47 auf die Oberfläche 17 der Substratplatte 2. Um die Breite der Substratplatte 2 abzudecken, werden im Ausführungsbeispiel der Figuren 5 und 6 zwei Reihen versetzt hintereinander angeordneter Düsen 45 der Oberfläche 17 der Substratplatte 2 in einem Abstand benachbart verwendet. Der zur Plasmaanlage 44 gehörende Generator wurde nicht dargestellt.

Nach der Kaschierstation 6 ist noch eine nicht weiter dargestellte Kühlstation vorgesehen, in der in Abhängigkeit von dem verwendeten Kleber die Substratplatte 2 mit der aufkaschierten Kunststofffolie 3 zur schnelleren Aushärtung abgekühlt werden kann.

### Bezugszeichenliste

- 1: Vorrichtung
- 2: Substratplatte
- 3: Kunststofffolie
- 4: Corona-Anlage
- 5: Kleberauftragvorrichtung
- 6: Kaschierstation
- 7: Reinigungsstation
- 8: Folienrolle
- 9: Schutzfolie
- 10: Schutzfolienrolle
- 11: Walze
- 12: Elektrode
- 13: Innenseite von 3
- 14: Laufrollen
- 15: Düse
- 16: Rolle von 5
- 17: Oberfläche von 2
- 18: Kaschierwalze von 6
- 19: Rückseite von 2
- 20: Gegendruckwalze von 6
- 21: Wärmequelle
- 22: Fördereinrichtung
- 23: Rundbürste
- 24: Schwertbürste
- 25: Bürstenband
- 26: Gehäuse von 23
- 27: Gehäuse von 24
- 28: Blasluft
- 29: Abluft
- 30: Feuchtreinigungsstation
- 31: Sprühvorrichtung von 30
- 32: Vorrichtung von 30
- 33: Tuch
- 34: Walze von 32
- 35: Vorratsrolle von 32
- 36: Verbrauchsrolle von 32
- 37: Tuch
- 38: Balken
- 39: Sprühvorrichtung
- 40: Trockenreinigungsstation
- 41: Übertragungsrolle von 40
- 42: Reinigungsrolle von 40
- 43: Förderrichtung
- 44: Plasmaanlage
- 45: Düse
- 46: Plasma
- 47: Düsenkopf

## Patentansprüche

1. Verfahren zum Kaschieren einer Substratplatte (2) mit einer Kunststofffolie (3), bei dem folgende Schritte durchgeführt werden:
a) Auftragen eines Klebers kontaktlos mittels Düsenauftrag auf die Rückseite (13) der Kunststofffolie (3);
b) Aufkaschieren der Kunststofffolie (3) auf die Substratplatte (2) mittels einer Kaschierwalze (18) und einer der Kaschierwalze (18) an der Rückseite 19) der Substratplatte (2) gegenüberliegenden Gegendruckwalze (20);
**dadurch gekennzeichnet,**
**dass** die Substratplatte (2) in Förderrichtung (43) vor der Kaschierwalze (18) in einer Reinigungsstation (7) in einem ersten Schritt mit Hilfe von quer zueinander bürstenden Bürsten (23, 24) unter Zuführung von über einen Ionenstab entladener Blasluft (28) und Absaugung von Feinstaub enthaltender Abluft (29) trocken gereinigt wird, und
**dass** in einem zweiten Schritt die Substratplatte mit organischen Lösungsmitteln und einem silikonfreien Tuch (33, 37) feucht gereinigt wird.

2. Verfahren nach Anspruch 1,
**dadurch gekennzeichnet,**
**dass** in einem dritten Schritt Oberflächenkontamination der Substratplatte (2) mittels einer Übertragungsrolle (41) auf eine Reinigungsrolle (42) mit klebriger Oberfläche übertragen wird.

3. Verfahren nach Anspruch 1 oder 2,
**dadurch gekennzeichnet,**
**dass** vor dem Kaschieren die zu kaschierende Oberfläche (17) der Substratplatte (2) mittels eines aus mindestens einer Düse (45) austretenden Plasmas (46) behandelt wird.

4. Verfahren nach einem der Ansprüche 1 bis 3, **dadurch gekennzeichnet,**
**dass** in dem ersten Schritt eine quer zur Förderrichtung (43) der Substratplatte (2) angeordnete Rundbürste (23) bürstet, und
**dass** eine der Rundbürste (23) nachgelagerte Schwertbürste (24) mit einem quer zur Förderrichtung (43) der Substratplatte (2') umlaufenden Bürstenband (25) quer zur Förderrichtung (43) bürstet.

5. Verfahren nach einem der Ansprüche 1 bis 4,
**dadurch gekennzeichnet,**
**dass** in dem zweiten Schritt das silikonfreie Tuch (33) mit dem Lösungsmittel besprüht und über eine die Oberfläche (17) der Substratplatte (2) kontaktierende Walze (34) von einer Vorratsrolle (35) auf eine Verbrauchsrolle (36) gewickelt wird und/oder dass ein mit einem Tuch (37) bespannter Balken (38) quer zur Förderrichtung (43) über die Oberfläche (17) der Substratplatte (2) gespannt wird, vor dem in regelmäßigen Abständen ein organisches Lösungsmittel gesprüht wird.

6. Verfahren nach einem der Ansprüche 1 bis 5,
**dadurch gekennzeichnet,**
**dass** seitliche Schnittkanten der Substratplatte (2) mit einer Kontaktwalze gereinigt werden.

7. Verfahren nach einem der Ansprüche 1 bis 6,
**dadurch gekennzeichnet,**
**dass** in einem dritten Schritt je zwei Übertragungsrollen (41) mit benachbarter Reinigungsrolle (42) hintereinander angeordnet sind, die zur kontinuierlichen Reinigung abwechselnd reinigen.

8. Verfahren nach einem der Ansprüche 1 bis 7,
**dadurch gekennzeichnet,**
**dass** vor dem Aufragten des Klebers eine Vorbehandlung der Kunststofffolie (3) auf ihrer der Substratplatte (2) zugewandten Rückseite (13) mittels einer Corona-Behandlung in einer Corona-Anlage(4) erfolgt und dass zwischen der Corona-Behandlung der Kunststofffolie (3) und dem Kleberauftrag eine Zeitdifferenz von mindestens 10 s, bevorzugt 20 s, eingehalten wird.

9. Verfahren nach einem der Ansprüche 1 bis 8,
**dadurch gekennzeichnet,**
**dass** die relative Feuchtigkeit geregelt wird.

10. Verfahren nach einem der Ansprüche 1 bis 9,
**dadurch gekennzeichnet,**
**dass** zwischen Klebeauftrag eines Schmelzklebers und der Kaschierung eine Zeitdifferenz von mindestens 5 s, bevorzugt 15 s, eingehalten wird.

11. Verfahren nach einem der Ansprüche 1 bis 10,
**dadurch gekennzeichnet,**
**dass** die Fördergeschwindigkeit der Substratplatten (2) 0,001 bis 0,3 m/min höher ist als die der Kaschierwalze (18).

12. Verfahren nach einem der Ansprüche 1 bis 11,
**dadurch gekennzeichnet,**
**dass** Folienüberstände der Kunststofffolie (3) gegenüber der Substratplattenbreite vor dem Kaschieren geschnitten werden.

13. Verfahren nach einem der Ansprüche 1 bis 12,
**dadurch gekennzeichnet,**
**dass** die Temperatur der heizbaren Kaschierwalze (18) auf einen Wert geregelt wird, der über der Glasübergangstemperatur der Kunststofffolie (3) liegt.

14. Verfahren nach einem der Ansprüche 1 bis 13,
**dadurch gekennzeichnet,**
**dass** vor der Kaschierwalze (18) der Schmelzkleber durch eine Wärmequelle (21) reaktiviert wird.

15. Vorrichtung zum Kaschieren einer Substratplatte (2) mit einer Kunststofffolie (3), die eine Kleberauftragevorrichtung (5) zum kontaktlosen Düsenauftrag eines Klebers, eine Kaschierstation (6) mit einer Kaschierwalze (18) und einer der Kaschierwalze (18) gegenüberliegenden Gegendruckwalze (20), sowie eine Fördereinrichtung (22) für die Substratplatten (2) aufweist,
**dadurch gekennzeichnet,**
**dass** eine Reinigungsstation (7) zur Reinigung der Oberfläche (17) der Substratplatten (2) der Kaschierstation (6) vorgelagert ist,
**dass** die Reinigungsstation (7) zur mechanischen Reinigung quer zueinander wirkende Bürsten (23, 24) aufweist, dass eine Absaugvorrichtung vorgesehen ist, über die von einem Ionenstab entladene Blasluft den Bürsten (23, 24) und der Oberfläche (17) zugeführt und abgesaugt werden kann, und
**dass** eine Feuchtreinigungsstation (30) vorgesehen ist, in der eine Sprühvorrichtung (31, 39) zum Besprühen mit organischen Lösungsmitteln und eine Vorrichtung (32) zur Reinigung der Substratoberfläche mit einem silikonfreien Tuch (33) oder Tuchbahn angeordnet ist.

16. Vorrichtung nach Anspruch 15,
**dadurch gekennzeichnet,**
**dass** eine Trockenreinigungsstation (40) mit einer Übertragungsrolle (41) zur Übertragung von Oberflächenkontamination der Substratplatte (2) auf eine mit der Übertragungsrolle (41) in Kontakt stehenden Reinigungsrolle (42) mit klebriger Oberfläche vorgesehen ist.

17. Vorrichtung nach Anspruch 15 oder 16,
**dadurch gekennzeichnet,**
**dass** der Kaschierstation (6) eine Plasmaanlage (44) mit mindestens einer Düse (45) zur Vorbehandlung der Oberfläche (17) der Substratplatte (2) mit einem Atmosphärendruckplasma vorgelagert ist.

## Claims

1. A method for laminating a substrate plate (2) with a plastic film (3), wherein the following steps are carried out:
a) application of an adhesive in a non-contact manner by means of nozzle application to the back side (13) of the plastic film (3);
b) laminating the plastic film (3) to the substrate plate by means of a laminating roller (18) and a counter-pressure roller (20) located opposite the laminating roller (18) at the back side (19) of the substrate roll (2);
**characterized in that**,
in a first step, in a cleaning station (7) located upstream of the laminating roller (18), the substrate plate (2) is dry-cleaned in the direction of conveyance (43) using brushes brushing transversely to each other (23, 24), while a stream of forced air (28) that has been discharged by passing it over an ionizing rod is supplied, and exhaust air (29) containing fine dust is extracted, and
that in a second step wet-cleaning of the substrate plate is carried out using organic solvents and a silicone-free cloth (33, 37).

2. A method according to Claim 1,
**characterized in that**,
in a third step, surface contamination of the substrate plate (2) is transferred by means of a transfer roll (41) to a cleaning roll (42) having a sticky surface.

3. A method according to either of Claims 1 or 2,
**characterized in that**,
prior to lamination, the surface (17) of the substrate plate (2) to be laminated is treated with a plasma (46) delivered from at least one nozzle (45).

4. A method according to any of Claims 1 to 3,
**characterized in that**,
in the first step, brushing is carried out by a round brush (23) arranged transversely to the direction of conveyance (43) of the substrate plate (2) and
that brushing is carried out transversely to direction of conveyance (43) by a sword brush (24) located downstream of the round brush (23), said sword brush (24) having a brush belt (25) circulating transversely to the direction of conveyance (43) of the substrate plate (2).

5. A method according to any of Claims 1 to 4,
**characterized in that**,
in the second step, the silicone-free cloth (33) is sprayed with the solvent and drawn from a supply roll (35), over a roller (34) that is in contact with the surface of the substrate plate (2), onto a used cloth roll (36), and/or
that a beam (38) covered with a cloth (37) is arranged transversely to the direction of conveyance across the surface (17) of the substrate plate (2), and ahead of said beam (38) an organic solvent is sprayed at regular intervals.

6. A method according to any of Claims 1 to 5,
**characterized in that**,
the lateral cut edges of the substrate plate (2) are cleaned by a contact roller.

7. A method according to any of Claims 1 to 6,
**characterized in that**,
in a third step, in each case two transfer rolls (41) with adjacent cleaning rolls (42) are arranged one behind the other and alternately carry out cleaning in order to achieve continuous cleaning.

8. A method according to any of Claims 1 to 7,
**characterized in that**,
prior to applying the adhesive a pre-treatment of the plastic film (3) on the back side (13) thereof facing the substrate plate (2), using a corona treatment in a corona system (4) is carried out and
that between the corona treatment of the plastic film (3) and the application of adhesive a time difference of at least 10 seconds, preferably 20 seconds, is maintained, and.

9. A method according to any of Claims 1 to 8,
**characterized in that**,
the relative humidity is regulated.

10. A method according to any of Claims 1 to 9,
**characterized in that**,
between the application of a hot melt adhesive and the lamination step a time difference of at least 5 seconds, preferably 15 seconds, is maintained.

11. A method according to any of Claims 1 to 10,
**characterized in that**,
the speed at which the substrate plates (2) are conveyed is 0.001 to 0.3 m/min higher than that of the laminating roller (18).

12. A method according to any of Claims 1 to 11,
**characterized in that**,
excess plastic film (3) projecting beyond the width of the substrate plate is cut off prior to lamination.

13. A method according to any of Claims 1 to 12,
**characterized in that**,
the temperature of the heatable laminating roller (18) is regulated to a value that is higher than the glass transition temperature of the plastic film (3).

14. A method according to any of Claims 1 to 13,
**characterized in that**,
the holt melt adhesive is reactivated by a heat source (21) upstream of the laminating roller (18).

15. A device for laminating a substrate plate (2) with a plastic film (3), said device having adhesive-application means (5) for non-contact nozzle application of an adhesive, a laminating station (6) having a laminating roller (18) and a counter-pressure roller (20) located opposite the laminating roller (18), as well as a conveying device (22) for the substrate plates (2),
**characterized in that**,
a cleaning station (7) for cleaning the surface (17) of the substrate plates (2) is located upstream of the laminating station (6)
that for the purpose of mechanical cleaning, the cleaning station (7) has brushes (23, 24) acting transversely to each other,
that an extraction device is provided via which the forced air that has been discharged by an ionizing rod can be supplied to the brushes (23, 24) and to the surface (17) and then be extracted, and
that a wet cleaning station (30) is provided in which a spray device (31, 39) is arranged to spray organic solvents and a device (32) for cleaning the substrate surface with a silicone-free cloth (33) or cloth web.

16. A device according to Claim 15,
**characterized in that**,
there is provided a dry-cleaning station (40) having a transfer roll (41) for transferring surface contamination from the substrate plate (2) to a cleaning roll (42) having a sticky surface that is in contact with the transfer roll (41).

17. A device according to Claim 15 or 16,
**characterized in that**,
a plasma system (44) having at least one nozzle (45) for pre-treating the surface (17) of the substrate plate (2) with an atmospheric pressure plasma is located upstream of the laminating station (6).

## Revendications

1. Procédé permettant de plastifier une plaque de substrat (2) à l'aide d'un film de plastique (3), ledit procédé comportant les étapes suivantes:
a) application sans contact d'une colle à l'aide d'une buse sur la face arrière du film de plastique (3);
b) application du film de plastique (3) sur la plaque de substrat à l'aide d'un cylindre de plastification (18) et d'un cylindre de contre-pression (20) opposé au cylindre de plastification (18) sur la face arrière (19) de la plaque de substrat;
**caractérisé en ce que**
la plaque de substrat (2) est nettoyée à sec dans un poste de nettoyage (7), situé avant le cylindre de plastification (18) dans la direction de transport (43), lors d'une première étape à l'aide de brosses (23, 24) à action transversale l'une par rapport à l'autre, un courant d'air forcé (28) déchargé par une tige piégeuse d'ions étant introduit par soufflage et l'air vicié (29) contenant les poussières fines étant aspiré, puis nettoyé de manière humide lors d'une deuxième étape à l'aide de solvants organiques et d'un chiffon exempt de silicone (33, 37).

2. Procédé selon la revendication 1,
**caractérisé en ce que**
lors d'une troisième étape, la contamination de surface sur la plaque de substrat (2) est transférée à un rouleau de nettoyage (42) ayant une surface collante, à l'aide d'un rouleau de transfert (41).

3. Procédé selon la revendication 1 ou 2,
**caractérisé en ce que**
avant la plastification, la surface (17) de la plaque de substrat (2) à plastifier est traitée au plasma (46) distribué à partir d'au moins une buse (45).

4. Procédé selon une quelconque des revendications 1 à 3,
**caractérisé en ce que**
le brossage est effectué, lors de la première étape, par une brosse ronde (23) située transversalement à la direction de transport (43) de la plaque de substrat (2) et que le brossage est effectué transversalement à la direction de transport (43) par une brosse ensiforme (24) située après la brosse ronde (23) et étant munie d'une courroie (25) se déplaçant transversalement à la direction de transport (43) de la plaque de substrat (2).

5. Procédé selon une quelconque des revendications 1 à 4,
**caractérisé en ce que**
le chiffon exempt de silicone (33) est pulvérisé au solvant et, lors de la deuxième étape, tiré d'un rouleau d'alimentation (35) sur un cylindre (34) en contact avec la surface (17) de la plaque de substrat (2), en direction d'un rouleau d'application (36), et/ou une ensouple (38) recouverte d'un chiffon (37) est disposée transversalement à la direction de transport sur la surface (17) de la plaque de substrat (2), et un solvant organique est pulvérisé à des intervalles réguliers avant ladite ensouple (38).

6. Procédé selon une quelconque des revendications 1 à 5,
**caractérisé en ce que**
les bords coupés latéraux de la plaque de substrat (2) sont nettoyés à l'aide d'un cylindre de contact.

7. Procédé selon une quelconque des revendications 1 à 6,
**caractérisé en ce que**
lors d'une troisième étape, deux rouleaux de transfert (41) avec des rouleaux de nettoyage associés (42) sont arrangés l'une après l'autre et nettoient en alternance afin d'assurer un nettoyage continu.

8. Procédé selon une quelconque des revendications 1 à 7,
**caractérisé en ce que**
avant l'application de la colle est effectué un prétraitement du film de plastique (3) sur son côté arrière (3) opposé à la plaque de substrat (2) au moyen d'un traitement corona dans un système corona (4), et qu'ensuite, un décalage temporel d'au moins 10 secondes, de préférence 20 secondes, est maintenu entre le traitement corona du film de plastique (3) et l'application de la colle.

9. Procédé selon une quelconque des revendications 1 à 8,
**caractérisé en ce que**
l'humidité relative est réglée.

10. Procédé selon une quelconque des revendications 1 à 9,
**caractérisé en ce que**
un décalage temporel d'au moins 5 secondes, de préférence 15 secondes est maintenu entre l'application d'une colle chaude et l'étape de plastification.

11. Procédé selon une quelconque des revendications 1 à 10,
**caractérisé en ce que**
la vitesse de transport des plaques de substrat (2) est de 0,001 à 0,3 m/min supérieure à celle du cylindre de plastification.

12. Procédé selon une quelconque des revendications 1 à 11,
**caractérisé en ce que**
l'excédent de film de plastique (3) qui dépasse la largeur de la plaque de substrat est coupé avant la plastification.

13. Procédé selon une quelconque des revendications 1 à 12,
**caractérisé en ce que**
la température du cylindre de plastification chauffant (18) est réglée à une valeur supérieure à la température de transition vitreuse du film de plastique (3).

14. Procédé selon une quelconque des revendications 1 à 13,
**caractérisé en ce que**
la colle chaude est réactivée par une source de chaleur (21) avant le cylindre de plastification (18).

15. Dispositif permettant de plastifier une plaque de substrat (2) à l'aide d'un film plastique (3), ledit dispositif comportant un moyen d'application de colle sans contact (5) à l'aide d'une buse, un poste de plastification (6) comportant un cylindre de plastification (18) et un cylindre de contre-pression (20) opposé au cylindre de plastification (18), ainsi qu'un dispositif de transport (22) pour les plaques de substrat (2),
**caractérisé en ce que**
un poste de nettoyage (7) pour le nettoyage de la surface (17) des plaques de substrat (2) est situé avant le poste de plastification (6), que le poste de nettoyage (7) pour le nettoyage mécanique comporte des brosses (23, 24) à action transversale l'une par rapport à l'autre, qu'un dispositif d'extraction est prévu à travers lequel l'air forcé déchargé par une tige piégeuse d'ions peut être envoyé aux brosses (23, 24) et à la surface (17) avant d'être extrait, et qu'un poste de nettoyage humide (30) est prévu dans lequel sont placés un dispositif de pulvérisation (31, 39) pour pulvériser des solvants organiques et un dispositif (32) pour nettoyer la surface de substrat à l'aide d'un chiffon exempt de silicone (33) ou d'une bande de tissu.

16. Procédé selon la revendication 15,
**caractérisé en ce que**
il est prévu un poste de nettoyage à sec (40) comportant un rouleau de transfert (41) pour transférer la contamination de surface de la plaque de substrat (2) à un rouleau de nettoyage (42) ayant une surface collante, qui est en contact avec ledit rouleau de transfert (41).

17. Procédé selon la revendication 15 ou 16,
**caractérisé en ce que**
un système de plasma (44) comportant au moins une buse (45) pour prétraiter la surface (17) de la plaque de substrat (2) à l'aide d'un plasma de pression atmosphérique est situé avant le poste de plastification (6).
